(19) **Europäisches Patentamt**

**European Patent Office**

**Office européen des brevets**

(11) **EP 0 857 019 B1**

(12) **EUROPEAN PATENT SPECIFICATION**

(45) Date of publication and mention
of the grant of the patent:
**18.12.2002 Bulletin 2002/51**

(51) Int Cl.[7]: **A01N 37/02**, A01N 27/00,
A01N 65/00

(21) Application number: **96918510.7**

(22) Date of filing: **21.06.1996**

(86) International application number:
**PCT/AU96/00374**

(87) International publication number:
**WO 97/000610 (09.01.1997 Gazette 1997/03)**

(54) **INSECTICIDAL AEROSOL SPRAY COMPOSITIONS**

INSEKTIZIDE AEROSOLSPRAY-ZUSAMMENSETZUNGEN

COMPOSITION INSECTICIDE A PULVERISER EN AEROSOL

(84) Designated Contracting States:
**CH DE ES FR GB GR IT LI NL**

(30) Priority: **22.06.1995 GB 9512685**
**11.10.1995 GB 9520764**

(43) Date of publication of application:
**12.08.1998 Bulletin 1998/33**

(73) Proprietor: **Reckitt Benckiser (Australia) Pty
Limited
West Ryde, NSW 2114 (AU)**

(72) Inventors:
  • **ALLISON, Gavin, Ian
    Clareville, NSW 2107 (AU)**
  • **ABELA, Mario
    Quakers Hill, NSW 2763 (AU)**

(74) Representative: **Brown, Andrew Stephen et al
Reckitt Benckiser plc,
Group Patents Department,
Dansom Lane
Hull HU8 7DS (GB)**

(56) References cited:
**EP-A- 0 420 144          AU-A- 4 434 793
FR-A- 1 605 359          US-A- 4 195 080
US-A- 4 379 168**

• **DATABASE WPI Week 9243 Derwent
  Publications Ltd., London, GB; AN 349638
  XP002142289 & CA 2 060 594 A (LIEBMAN Z M),
  6 August 1992 (1992-08-06)**

• **DATABASE WPI Week 9125 Derwent
  Publications Ltd., London, GB; AN 048802
  XP002142290 & JP 03 002103 A (HOKKO CHEM
  INC CO LTD, TAIYO CHEM INC CO LTD)**

• **DATABASE WPI Week 9250 Derwent
  Publications Ltd., London, GB; AN 411544
  XP002142291 & JP 04 308510 A (EARTH
  SEIYAKU KK)**

• **DERWENT ABSTRACT, Accession No.
  92-349638; & CA,A,2 060 594 (LIEBMAN Z M) 6
  August 1992.**

• **DERWENT ABSTRACT, Accession No. 67724A;
  & JP,A,53 093 187 (SHINTO PAINT KK) 15 August
  1978.**

• **DERWENT ABSTRACT, Accession No.
  91-203606; & JP,A,03 127 701 (KANEBO KK) 30
  May 1991.**

• **DERWENT ABSTRACT, Accession No.
  92-038688; & JP,A,03 285 993 (SHISEIDO KK) 17
  December 1991.**

• **DERWENT ABSTRACT, Accession No.
  91-099128; & JP,A,03 044 305 (EARTH SEIYAKU
  KK) 26 February 1991.**

• **DERWENT ABSTRACT, Accession No.
  91-048802; & JP,A,03 002 103 (HOKKO CHEM.
  IND. KK) 8 January 1991.**

• **DERWENT ABSTACT, Accession No. 87-337211;
  & JP,A,62 240 602 (EARTH SEIYAKU KK) 21
  October 1987.**

• **VET. HUM. TOXICOL., 30(3), June 1988, F.A.
  POWERS et al., "An Evaluation of the Acute
  Toxicity of an Insecticidal Spray Containing
  Linalool, D-Limonene and Piperonyl Butoxide
  Applied Topically to Domestic Cats", pages
  206-210.**

**Description**

Technical Field

The present invention relates to the use of d-limonene, orange oil or mixtures thereof as an attractant in an insect-attracting insecticidal aerosol spray compositions.

Background Art

A number of methods are known to deal with insects like cockroaches. One is the use of baits and traps. Another method is the use of insecticidal aerosol sprays.

The present invention relates to the use of d-limonene, orange oil or mixtures thereof as an attractant in an insect-attracting insecticidal aerosol spray composition that, when sprayed onto a surface, has been developed to kill cockroaches, ants, fleas, silverfish, spiders, clothes moth, carpet beetle, Portuguese millipede and bed bugs.

FR-A-1,605,359 discloses an insecticidal composition of dimethyl dichlorovinyl phosphate and orange oil. The dimethyl dichlorovinyl phosphate has attracting power, as does the mixture with the orange oil.

US-A-4,195,080 discloses that the essence oils of citrus fruit juices, known to be relatively non-toxic to humans, plants and animals, have been found to be lethal insecticides. In addition, the essence oils exhibit a synergistic effect when combined with conventional botanical insecticides such as pyrethrum and the efficiency of the essence oils of citrus fruit juices is increased by the use of a synergist such as technical piperonyl butoxide.

One of the advantages of the aerosol spray composition is that it can be sprayed on to a surface to produce long lasting barrier protection. For example, to keep cockroaches at bay, the insecticidal aerosol composition can be sprayed onto skirting boards, under cupboards, stoves and drawers.

The term "insecticide" is well known in the art and includes orthodox chemical insecticides and appropriate insect virus, bacterial or hormone compositions able to affect the specific insect species under attack. It has also been found that certain insecticides exhibit a repellence to insects. In particular, the present inventors have found that the pyrethrin, pyrethroid, cyanopyrethroid and others (eg. the carbamates) class of insecticide tends to have a repellent effect on insects, such as cockroaches.

This is clearly undesirable for surface applications and means of overcoming this defect has needed to be found to provide a more effective insecticidal aerosol spray.

The present inventors tested a number of insect attractants. On the whole, these attractants did not significantly mask the negative effect of the repellency of the insecticide. It was surprisingly found, however, that three attractants were significantly better than the others to enable a commercially acceptable insecticidal aerosol spray to be produced.

Given the volatile nature of some of the attractants used, it would be expected that once compositions of the invention had been sprayed onto a surface, attractancy would diminish rapidly with time. In fact It was expected that attractancy would last no longer than about two weeks. Contrary to expectations, attractancy is maintained for a substantial period of time, in particular for at least 13 weeks.

Maintenance of this attractancy property is particularly beneficial in an insecticidal surface spray as it will produce prolonged effective insecticidal activity.

Disclosure of the Invention

According to the present invention there is provided the use of d-limonene, orange oil or mixtures thereof as an attractant in an amount of 1 to 10% w/w in an insect-attracting insecticidal aerosol spray composition when sprayed onto a surface, which composition includes in addition to the d-limonene, orange oil or mixtures thereof, one or more insecticides selected from the group consisting of the pyrethrin, pyrethroid, cyanopyrethroid and carbamate class of insecticide.

In a preferred embodiment there is provided the use of d-limonene, orange oil or mixtures thereof as an attractant in an insect attracting insecticidal aerosol spray composition when sprayed onto a surface comprising:

(a) 0.01 to 5% w/w of the one or more insecticides (preferably cyanopyrethroids, most preferably selected from the group consisting of cypermethrin [(RS)-alpha-cyano-3-phenoxybenzyl (1RS) -cis,trans-3-(2,2-dichlorovinyl)-2,2-dimethyl-cyclopropane carboxylate], tetramethrin [3,4,5,6-tetrahydro-phthalidimomethyl (1RS) cis transchrysanthemate], and mixtures thereof);
(b) 10 to 90% w/w of a solvent;
(c) 10 to 90% w/w, more preferably 25 to 45%, most preferably 40% of a propellant (preferably selected from the group of hydrocarbon and dimethylether, more preferably selected from the group consisting from methane, ethane, propane, n-butane, isobutane, pentane, isopentane and mixtures thereof); and
(d) 1 to 10% w/w of the attractant, being d-limonene, orange oil or mixtures thereof.

Furthermore, in a preferred embodiment there is provided the use of d-limonene, orange oil or mixtures thereof as an attractant in an insect-attracting insecticidal aerosol composition when sprayed onto a surface comprising:

(a) 0.01 to 5% w/w, (preferably 0.05 to 3.0% w/w, more preferably 0.2 to 0.6% w/w) of the one or more insecticides (preferably cyanopyrethroids, most preferably selected from the group consisting of cypermethrin [(RS) -alpha-cyano-3-phenoxybenzyl (1RS)-cis, trans-3-(2,2-dichlorovinyl)- 2,2-dimethyl-cyclopropane carboyxlate], tertamethrin [3,4,5,6-tetrahydro-phthalidimomethyl (1RS) cis, transchrysanthemate], and mixtures thereof);
(b) 10 to 90% w/w, (preferably 60 to 70% w/w) of a solvent;
(c) 2 to 10% w/w (preferably 5%) of a compressed gas propellant, (preferably selected from the group consisting of carbon dioxide, nitrogen, and air); and
(d) 1 to 10% w/w of the attractant being d-limonene, orange oil or mixtures thereof.

Still further, in a preferred form, the insect-attracting insecticidal aerosol composition of the present invention when sprayed onto a surface maintains an insecticidal and insect attractancy for a period of 13 weeks or more.

(a) Insecticide

The insecticides are killer active insecticides, of the pyrethrin, pyrethroid, cyanopyrethroid and carbamate class of insecticide, more preferably cyanopyrethroids, and most preferably cypermethrin (which is (RS)-alpha-cyano-3-phenoxybenzyl (1RS)-cis,trans-3-(2,2-dichlorovinyl)-2,2-dimethyl-cyclopropane carboxylate, commercially available from ICI) or tetramethrin (which is 3,4,5,6-tetrahydro-phthalidimomethyl (1RS) cis ,transchrysanthemate, commercially available from Sumitomo) or mixtures thereof.
The one or more insecticides are preferably present in an amount of 0.05 to 3.0%, more preferably 0.2 to 0.6% by weight of the composition.
The insecticides are insect repelling.

(b) Solvent

Preferably the solvent is selected from isoparaffins and normal paraffins (e.g. $C_{1-12}$ alkanes) or kerosene. An example of a commercially available solvent is a $C_{12}$ alkane (which is commercially available).
Preferably the solvent is present in an amount from 10 to 90%, more preferably 60 to 70% by weight of the composition.

(c) Propellant

Preferably the propellant is a hydrocarbon propellant, a dimethylether propellant or a compressed gas propellant.
The preferred hydrocarbon propellants are selected from methane, ethane, propane, n-butane, isobutane, pentane and isopentane.
Preferably the hydrocarbon or dimethylether propellant is present in an amount of 10 to 90%, more preferably about 10 to 50%, even more preferably 25 to 45%, and especially about 40% by weight of the composition.
When compressed gases are used as a propellant generally these will be carbon dioxide, nitrogen or air. It will be appreciated by one skilled in the art that lower concentrations of compressed gas propellants are required compared to the concentrations required for hydrocarbon or dimethylether propellants. Usually, compressed gas will be used at a concentration of 2 to 10%, and preferably about 5%.
The person skilled in the art will appreciate that the pressure in an aerosol package will be determined by propellant or mixture of propellant. This pressure will have a determining effect on spray rates. Hence for any particular valve system, varying the propellant or propellant mixture will allow for the selection of a desired spray rate. Likewise for a particular propellant or propellant mixture, it is possible to select a valve and actuator system to achieve a desired rate.

(d) Attractants

The attractants suitable for the present invention are d-limonene, orange oil or mixtures thereof. Preferably, the attractant is orange oil.

The amount of attractant used is from 1 to 10%, preferably 1 to 5%, most preferably 2 to 4%, and especially 3% by weight of the composition.

Optional Other Ingredients

The aerosol spray compositions according to the invention may further include one or more preservatives such as butylated hydroxytoluene (BHT). When a preservative is present, it is preferably present in an amount of 0.001 to 0.1% by weight based on the composition.

The aerosol spray compositions according to the invention may further include a booster for increasing the residual effect of the aerosol spray composition. A preferred booster is fumed silica powder.

When a booster is present, it is preferably present in an amount of 0.05 to 0.2% by weight of the composition.

Examples of preferred silica powder are highly dispersed amorphous hydrophilic silicon dioxide and highly dispersed amorphous hydrophobic silicon dioxide (commercially available).

The aerosol spray compositions according to the invention may also include a perfume. If a perfume is present, it is preferably present in an amount of 0.05 to 2% by weight of the composition.

The aerosol spray composition can be produced by dissolving the insecticide in the solvent preferably at an elevated temperature (i.e. 40 to 50°C) followed by cooling the mixture. Then this mixture, together with the attractant and one or more of the optional additives selected from preservatives, perfumes and boosters are placed into an empty aerosol can, followed by adding the propellant by normal methods, e.g. by normal hydrocarbon aerosol gassing.

In this specification all percentages are by weight, unless indicated to the contrary.

Modes for Carrying Out the Invention

The invention will now be illustrated by the following Examples.

EXAMPLE 1

0.286% of cypermethrin (70%) and 0.381% of tetramethrin (92%) are added to 66.118% of a commercially available $C_{12}$ alkane. This mixture is heated to 50°C to ensure complete dissolution of the two insecticides in the solvent.

This is then cooled to room temperature. The resultant mixture is then added to an empty aerosol can together with 0.1% of a perfume, 0.005 of BHT, 0.1% of a commercially available highly dispersed amorphous hydrophilic silicon dioxide, 0.01% of a commercially available highly dispersed amorphous hydrophobic silicon dioxide and 3% of orange oil. The aerosol can is then gassed with 30% of a Propellant H-55, a blend of 74% propane and 26% butane (commercially available from Esso) by well-known hydrocarbon gassing techniques.

Example 1 can be repeated using 3.0% d-limonene in place of 3.0% of orange oil.

COMPARATIVE EXAMPLE 2

Example 1 is repeated using 3.0% lauric acid in place of 3.0% of orange oil.

EXAMPLE 3

Example 1 is repeated as follows: 0.286% w/w of cypermethrin (70%)and 0.381% w/w of tetramethrin (92%) are added to 66.218% of a commercially available $C_{12}$ alkane. This mixture is heated to 50°C to ensure complete dissolution of the two insecticides.

This is then cooled to room temperature. The resultant mixture is then added to an empty aerosol can together with 0.005% w/w of butylated hydroxy toluene, 0.1% w/w of a commercially available highly dispersed amorphous hydrophobic silicon dioxide, 0.010% w/w of a commercially available dispersed amorphous hydrophobic silicon dioxide and 3% w/w of natural orange oil.

The aerosol can is then gassed with 7.792% of propane and 22.20% of butane by well known hydrocarbon gassing techniques.

COMPARATIVE EXAMPLE A.

0.286% of cypermethrin and 0.381% of tetramethrin are added to 69.118% of a solvent. This mixture is heated to 50°C to ensure complete dissolution of the two insecticides in the solvent.

This is then cooled to room temperature. The resultant mixture is then added to an empty aerosol can together with 0.1% of a perfume, 0.005 of BHT, 0.1% of a commercially available highly dispersed amorphous hydrophilic silicon dioxide and 0.01% of a commercially available highly dispersed amorphous hydrophobic silicon dioxide.

The aerosol can is then gassed with 30% of a propellant H-55 by well-known hydrocarbon gassing techniques.

COMPARATIVE EXAMPLES B - F

Example 1 is repeated using instead of 3% orange oil, one of the following attractants:

| Example | Attractant |
|---------|-----------|
| B | 3% of pineapple oil |
| C | 3% of banana oil |
| D | 3% of palmitic acid |
| E | 3% of soy bean oil |
| F | 3% of oleyl alcohol |

APPLICATION EXAMPLE

Forty mixed age American cockroaches (*Periplaneta americana*)-mixed sex adults and mixed stage nymphs were placed in holding jars. The cockroaches were provided with harbourages and water but no food and left for 60 hours.

The cockroaches were then placed in the test area for a further 24 hours, with no food but with water and harbourages.

Two containers, with ramps to facilitate the entry of cockroaches into the container, and which are 9 cm in diameter and 9.5 cm high were placed at opposite ends of the test area. Special care was taken not to disturb the cockroaches.

A 5.5 cm filter disc was sprayed to deposit 1 g of the composition of Example 1 and allowed to dry for two hours after which the filter paper was placed in one of the containers.

At the same time an untreated 5.5 cm filter disc was placed in the other container.

After 24 hours, the number of cockroaches in each container was counted.

Ten such tests were performed and from the results of each of the ten tests, an attractancy index was determined, which is calculated as follows:

$$\text{Attractancy Index} = \frac{\text{Number of cockroaches in treated container}}{\text{Number of cockroaches in untreated container}}$$

An index of less than 1 is poor as it indicates that the tested product is worse than the control.

The Application Example was repeated using 1 g of each of the compositions of Comparative Example 2 and Comparative Examples A to F (in the place of 1 g of the composition of Example 1). For the composition of each of Comparative Example 2 and Comparative Examples A to F, ten such tests were performed, from which the attractancy index can be calculated. The results can be seen in Table 1 below.

Table 1

| Test | Attractancy Index |
|------|-------------------|
| Example 1 | 1.44 |
| Comparative Example 2 | 1.27 |
| Comparative Example A | 0.27 |
| Comparative Example B | 0.32 |
| Comparative Example C | 0.63 |
| Comparative Example D | 0.43 |
| Comparative Example E | 0.60 |
| Comparative Example F | 0.58 |

As can be seen from the above results, the compositions of Example 1 is significantly better at insect attractancy than the control (Comparative Example A) or compositions using other common attractants.

## INSECTICIDAL PERFORMANCE

In order to demonstrate the insecticidal performance *of* the invention, Example 1 and Comparative Example 2 (as previously described) were evaluated using the following method. For the purposes of comparison, a number of examples of prior art compositions were included.

Method

Explanation of Methodology:

In this study, a treated plate, 100 cm$^2$ in area was placed in a base arena 2,828 cm$^2$ in area. As the area of the plate was only approximately 3.5% of the total base area, cockroaches were not forced to walk across the plate and it could be easily avoided when obtaining food or water. Any cockroaches which were knocked down in the arena came into contact with the treated plate by choice. The addition of a successful attractant should either reduce the repellency of the surface spray or possibly attract the cockroaches onto the treated surface resulting in a higher percentage knockdown for that formulation.

A. Treatment Method

1. A 10 cm x 10 cm (100 cm$^2$ area) masonite plate was placed in the centre of a 0.25m$^2$ grid. A can of each example was held 20 cm from the grid and the entire area was sprayed for a period of 8 seconds (8 horizontal passes).
2. Control plates consisted of untreated masonite plates as above.
3. All plates were stored vertically in racks in an air conditioned laboratory at 22±2°C. The laboratory was fitted with windows so the plates were subject to a normal day/night cycle.

B. Bioassay Method

1. Twenty American cockroaches (5 adults and 15 mid to late stage nymphs) were placed in a large plastic arena (base area 2,828 cm$^2$ and height 46 cm). The sides of the arena were coated in fluon to prevent the cockroaches escaping.
2. The cockroaches were provided with a harbourage in the form of a roll of corrugated cardboard, food and a water source.
3. The cockroaches were left in each arena for 24 hours to acclimatise.
4. At 13 weeks post treatment, a treated masonite plate was carefully placed in each arena. The plate was placed on the opposite side of the arena to the harbourage. The cockroaches were not disturbed when the plate was placed in the arena.
5. Knockdown of cockroaches was noted at 24, 48 and 72 hours after placement of the plates. The temperature during the test was 22±2°C.
6. There were 5 replicates of each of each example and control. The placement of corrugated cardboard, food, water and plates were identical for each of the treatment and control replicates.

Table 2

| Test | Percentage Knockdown of Cockroaches at Various Times After Plate Introduction | | |
|---|---|---|---|
| | 24 hours | 48 hours | 72 hours |
| Example 1 | 36 | 54 | 54 |
| Comparative Example 2 | 24 | 28 | 38 |
| Prior Art Comparison A | 14 | 21 | 19 |
| Prior Art Comparison B | 4 | 7 | 9 |
| Prior Art Comparison C | 15 | 16 | 23 |
| Control | 2 | 2 | 2 |

The results shown in Table 2 clearly indicate that Example 1 showed superior knockdown to all other examples tested. Given that the assessment was performed 13 weeks after initial treatment, it is evident that these examples of the invention demonstrate that insecticidal performance is maintained over a prolonged period as a result of their attractancy.

**Claims**

1. The use of d-limonene, orange oil or mixtures thereof as an attractant in an amount of 1 to 10% w/w in an insect-attracting insecticidal aerosol spray composition when sprayed onto a surface, which composition includes in addition to the d-limonene, orange oil or mixtures thereof, one or more insecticides selected from the group consisting of the pyrethrin, pyrethroid, cyanopyrethroid and carbamate class of insecticide.

2. The use according to claim 1 wherein the attractant is a mixture of d-limonene and orange oil.

3. The use according to claim 1 wherein the attractant is orange oil.

4. The use according to any one of claims 1 to 3 wherein the insect-attracting insecticidal aerosol spray composition comprises:

   (a) 0.01 to 5% w/w of the one or more insecticides (preferably cyanopyrethroids, most preferably selected from the group consisting of cypermethrin [(RS)-alpha-cyano-3-phenoxybenzyl (1RS)-cis, trans-3-(2,2-dichlorovinyl)- 2,2-dimethyl-cyclopropane carboxylate], tetramethrin [3,4,5,6-tetrahydro-phthalidimomethyl (1RS) cis transchrysanthemate], and mixtures thereof);
   (b) 10 to 90% w/w of a solvent:
   (c) 10 to 90% w/w (preferably 10 to 50% w/w, more preferably 25 to 45%, most preferably 40%) of a propellant (preferably selected from the group of hydrocarbon and dimethylether, more preferably selected from the group consisting of from methane, ethane, propane, n-butane, isobutane, pentane, isopentane and mixtures thereof); and
   (d) 1 to 10% w/w of the attractant, being d-limonene, orange oil or mixtures thereof.

5. The use according to any one of claims 1 to 3 wherein the insect-attracting insecticidal aerosol spray composition comprises:

   (a) 0.01 to 5% w/w, (preferably 0.05 to 3.0% w/w, more preferably 0.2 to 0.6% w/w) of the one or more insecticides (preferably cyanopyrethroids, most preferably selected from the group consisting of cypermethrin [(RS)-alpha-cyano-3-phenoxybenzyl (1RS)-cis, trans-3-(2,2-dichlorovinyl)-2,2-dimethyl-cyclopropane carboxylate], tertamethrin [3,4,5,6-tetrahydro-phthalidimomethyl (1RS) cis, transchrysanthemate], and mixtures thereof);
   (b) 10 to 90% w/w (preferably 60 to 70% w/w) of a solvent;
   (c) 2 to 10% w/w (preferably 5%) of a compressed gas propellant, (preferably selected from the group consisting of carbon dioxide, nitrogen, and air); and
   (d) 1 to 10% w/w of the attractant being d-limonene, orange oil or mixtures thereof.

6. The use according to any one of the preceding claims wherein the composition further includes one or more preservatives (preferably butylated hydroxytoluene, preferably in an amount of 0.001 to 0.1%), boosters (preferably a fumed silica powder, more preferably selected from highly dispersed amorphous hydrophilic silicon dioxide and highly dispersed amorphous hydrophobic silicon dioxide, preferably in an amount of 0.05 to 0.2% w/w); and perfumes (preferably in an amount of 0.05 to 2.0% w/w).

7. The use according to any one of the preceding claims wherein the insect-attracting insecticidal aerosol composition when sprayed onto a surface maintains an insecticidal and insect attractancy for a period of 13 weeks or more.

**Patentansprüche**

1. Verwendung von d-Limonen, Orangenöl oder Gemischen hiervon als Lockstoff in einer Menge von 1 bis 10 % g/g in einer Insekten anlockenden, insektiziden Aerosolsprühzusammensetzung bei Sprühen auf eine Oberfläche, wobei die Zusammensetzung neben dem d-Limonen, Orangenöl oder Gemischen hiervon ein oder mehrere Insektizide umfasst, die aus Pyrethrin, Pyrethroid, Cyanopyrethroid und der Carbamatklasse der Insektizide ausgewählt ist.

2. Verwendung nach Anpruch 1, wobei der Lockstoff ein Gemisch aus d-Limonen und Orangenöl ist.

3. Verwendung nach Anspruch 1, wobei der Lockstoff Orangenöl ist.

4. Verwendung nach einem der Ansprüche 1 bis 3, wobei die Insekten anlockende, insektizide Aerosolsprühzusammensetzung die folgenden Bestandteile umfässt:

(a) 0,01 bis 5 % g/g eines oder mehrerer Insektizide (vorzugsweise Cyanopyrethroide, insbesondere ausgewählt aus Cypermethrin [(RS)-$\alpha$-Cyano-3-phenoxybenzyl-(1RS)-cis- trans-3-(2,2-dichlorvinyl)-2,2-dimethyl-cyclopropancarboxylat], Tetramethrin [3,4,5,6-Tetrahydro-phthalidinomethyl-(1RS)-cis, trans-chrysanthemat] und Gemischen hiervon,
(b) 10 bis 90 % g/g Lösemittel,
(c) 10 bis 90 % g/g (vorzugsweise 10 bis 50 % g/g, insbesondere 25 bis 45 %, speziell 40 %) eines Treibmittels (vorzugsweise ausgewählt aus Kohlenwasserstoff und Dimethylether, insbesondere ausgewählt aus Methan, Ethan, Propan, n-Butan, Isobutan, Pentan, Isopentan und Gemischen hiervon), und
(d) 1 bis 10 % g/g eines Lockstoffs bei dem es sich um d-Limonen, Orangenöl oder Gemische hiervon handelt.

5. Verwendung nach einem der Ansprüche 1 bis 3, wobei die Insekten anlockende, insektizide Aerolsolsprühzusammensetzung die folgenden Bestandteile umfässt:

(a) 0,01 bis 5 % g/g (vorzugsweise 0,05 bis 3,0 % g/g insbesondere 0,2 bis 0,6 % g/g) des einen oder der mehreren Insektizide (vorzugsweise Cyanopyrethroide, insbesondere ausgewählt aus Cypermethrin [(RS)-$\alpha$-Cyano-3-phenoxybenzyl-(1RS)-cis,trans-3-(2,2-dichlorvinyl)-2,2-dimethylcyclopropancarboxylat], Tetramethrin [3,4,5,6-Tetrahydro-phthalidinomethyl-(1RS)-cis,transchrysanthemat] und Gemischen hiervon),
(b) 10 bis 90 % g/g (vorzugsweise 60 bis 70 % g/g) Lösemittel,
(c) 2 bis 10 % g/g (vorzugsweise 5 %) eines Druckgastreibmittels (vorzugsweise ausgewählt aus Kohlendioxid, Stickstoff and Luft), und
(d) 1 bis 10 % g/g des Lockstoffs bei dem es sich um d-Limonen, Orangenöl oder Gemische hiervon handelt.

6. Verwendung nach einem der vorhergehenden Ansprüche, wobei die Zusammensetzung ferner ein oder mehrere Konservierungsmittel (vorzugsweise butyliertes Hydroxytoluol, vorzugsweise in einer Menge von 0,001 bis 0,1 %), Verstärker (vorzugsweise ein Quarzstaubpulver, insbesondere ausgewählt aus hochdispergiertem amorphem hydrophilem Siliciumdioxid und hoxhdispersem amorphem hydrophobem Siliciumdioxid, vorzugsweise in einer Menge von 0,05 bis 0,2 % g/g) und Duftstoffe (vorzugsweise in einer Menge von 0,05 bis 2,0 % g/g).

7. Verwendung nach einem der vorhergehenden Ansprüche, wobei die Insekten anlockende, insektizide Aerosolzusammensetzung bei Aufsprühen auf eine Oberfläche eine insektizide und Insekten anlockende Wirkung während eines Zeitraums von 13 Wochen oder mehr beibehält.

**Revendications**

1. Utilisation de d-limonène, d'essence d'orange ou de leurs mélanges comme agent attractif en une quantité de 1 à 10 % en poids/poids dans une composition insecticide pulvérisée en aérosol, attirant les insectes lors de sa pulvérisation sur une surface, composition qui comprend, en plus du d-limonène, de l'essence d'orange ou de leurs mélanges, un ou plusieurs insecticides choisis dans le groupe consistant en les catégories d'insecticides constituées des pyréthrines, des pyréthroïdes, des cyanopyréthroides et des carbamates.

2. Utilisation suivant la revendication 1, dans laquelle l'agent attractif consiste en un mélange de d-limonène et d'essence d'orange.

3. Utilisation suivant la revendication 1, dans laquelle l'agent attractif est l'essence d'orange.

4. Utilisation suivant l'une quelconque des revendications 1 à 3, dans laquelle la composition insecticide pulvérisée en aérosol, attirant les insectes, comprend :

(a) 0,01 à 5 % en poids/poids du ou des insecticides (avantageusement des cyanopyréthroïdes, choisis de préférence dans le groupe consistant en la cyperméthrine [(1RS)-cis, trans-3-(2,2-dichlorovinyl)- 2,2-diméthylcyclopropane-carboxylate de (RS)-alpha-cyano-3-phénoxybenzyle], tétraméthrine [(1RS)-cis,trans-chrysanthémate de 3,4,5,6-tétrahydro-phtalimidométhyle] et leurs mélanges ;

(b) 10 à 90 % en poids/poids d'un solvant :

(c) 10 à 90 % en poids/poids (avantageusement 10 à 50 % en poids/poids, mieux encore 25 à 45 %, de préférence 40 %) d'un agent propulseur (choisi avantageusement dans le groupe consistant en un hydrocarbure et l'éther diméthylique, de préférence choisi dans le groupe consistant en le méthane, l'éthane, le propane, le n-butane, l'isobutane, le pentane, l'isopentane et leurs mélanges) ; et

(d) 1 à 10 % en poids/poids de l'agent attractif, consistant en d-limonène, essence d'orange ou leurs mélanges.

5. Utilisation suivant l'une quelconque des revendications 1 à 3, dans laquelle la composition insecticide pulvérisée en aérosol, attirant les insectes, comprend :

(a) 0,01 à 5 % en poids/poids (avantageusement 0,05 à 3,0 % en poids/poids, de préférence 0,2 à 0,6 % en poids/poids) du ou des insecticides (avantageusement des cyanopyréthroïdes, de préférence choisis dans le groupe consistant en la cyperméthrine [(1RS)-cis,trans-3-(2,2-dichlorovinyl)-2,2-diméthylcyclopropane-carboxylate de (RS)-alpha-cyano-3-phénoxybenzyle], la tétraméthrine [(1RS)-cis,trans-chrysanthémate de 3,4,5,6-tétrahydro-phtalimidométhyle] et leurs mélanges) ;

(b) 10 à 90 % en poids/poids (de préférence 60 à 70 % en poids/poids) d'un solvant ;

(c) 2 à 10 % en poids/poids (de préférence 5 %) d'un agent propulseur consistant en un gaz comprimé (choisi de préférence dans le groupe consistant en le dioxyde de carbone, l'azote et l'air) ; et

(d) 1 à 10 % en poids/poids de l'agent attractif consistant en d-limonène, l'essence d'orange ou leurs mélanges.

6. Utilisation suivant l'une quelconque des revendications précédentes, dans laquelle la composition comprend en outre un ou plusieurs conservateurs (de préférence le butylhydroxytoluène, de préférence en une quantité de 0,001 à 0,1 %), des renforçateurs (de préférence une poudre de silice ultra-fine, choisie de préférence entre du dioxyde de silicium hydrophile amorphe hautement dispersé et du dioxyde de silicium hydrophobe amorphe hautement dispersé, de préférence en une quantité de 0,05 à 0,2 % en poids/poids) ;

et

des parfums (de préférence en une quantité de 0,05 à 2,0 % en poids/poids).

7. Utilisation suivant l'une quelconque des revendications précédentes, dans laquelle la composition en aérosol d'insecticides attirant les insectes, lors de sa pulvérisation sur une surface, conserve un pouvoir insecticide et attractif pour les insectes pendant une période de temps égale ou supérieure à 13 semaines.